# EUROPÄISCHE PATENTSCHRIFT

(11) **EP 1 561 710 B1**
(45) Veröffentlichungstag und Bekanntmachung des Hinweises auf die Patenterteilung: **24.10.2007**
(21) Anmeldenummer: 05100769.8
(22) Anmeldetag: 04.02.2005
(51) Int. Cl.: B65G 1/14, B65G 57/00

(54) **Spannvorrichtung**
Clamping device
Dispositif de serrage

(30) Priorität: 06.02.2004 AT 1782004
(43) Veröffentlichungstag der Anmeldung: 10.08.2005
(73) Patentinhaber: Hofegger, Christian, 3385 Prinzersdorf (AT)
(72) Erfinder: Moser, Friederike, 3130 Herzogenburg (AT); Hofegger, Christian, 3385 Prinzersdorf (AT)
(74) Vertreter: Müllner, Martin

(56) Entgegenhaltungen:
- EP-A- 0 069 503
- US-A- 4 247 092
- US-A- 4 861 009

## Beschreibung

### Technisches Gebiet

Die Erfindung betrifft eine Spannvorrichtung zum Sichern von stapelbarem Ladegut, mit einem Gehäuseunterteil und einem im Gehäuseunterteil verschiebbar gelagerten Schiebeteil, wobei der Gehäuseunterteil und der Schiebeteil aus jeweils einem Formrohr bestehen, und am unteren Ende des Formrohres des Gehäuseunterteiles eine Fußplatte sowie am oberen Ende des Formrohres des Schiebeteiles eine Kopfplatte angeordnet ist.

### Stand der Technik

Im Transportgewerbe sind wesentliche Bestandteile stapelbare Paletten, Gitterboxen, Kisten und Schachteln als Träger von Waren. Das Problem ist, dass oben genannte Warenbehälter, welche in vollem oder leerem Zustand beispielsweise auf der Ladefläche eines Lastfahrzeuges gestapelt werden, beim Anfahren bzw. Bremsen, bei Berg-, Tal- und Kurvenfahrten und auch infolge von Vibration im Gesamtstapel kippen, verrutschen oder einzeln auseinander geschüttelt werden können.

Zur Sicherung der Stapel sind Netze, Spannbänder, Ketten, zur Ladefläche gespannte Zurrgurte und zwischen den Außenlängslatten eingespannte, verschiebbare Querlatten bekannt.

Aus der EP 069503 Aist eine Spannvorrichtung der oben angegebenen Art bekannt, bei der der Schiebeteil und der Gehäuseunterteil durch einen deren Formrohre durchsetzenden Bolzen gegeneinander gesichert sind. Nachteil dieser Anordnung ist jedoch, dass die Verstellung des Schiebeteils im Gehäuseunterteil lediglich in Stufen erfolgen kann, die durch den Abstand von in den Formrohren angeordneten Öffnungen vorgegeben sind.

### Offenbarung der Erfindung

### Technische Aufgabe

Der Erfindung liegt die Aufgabe zugrunde, eine einfache, stufenlos auf alle Stapelhöhen anwendbare und für den Fahrer einfach zu bedienende Vorrichtung bereitzustellen, welche vom Transportgerät (LKW, Eisenbahnwaggon) unabhängig, schnell und sicher montiert werden kann.

### Technische Lösung

Die Erfindung löst die gestellte Aufgabe dadurch, dass im Bereich des offenen oberen Endes des Formrohres des Gehäuseunterteiles eine Gurtspannvorrichtung angeordnet ist, die zum Spannen eines den Gehäuseunterteil und den Schiebeteil verbindenden Spanngurtes vorgesehen ist.

Durch das Vorsehen des Spanngurtes und der Gurtspannvorrichtung ist die erwünschte stufenlose Verstellbarkeit des Schiebeteiles im Gehäuseunterteil gewährleistet.

Vorteilhafte Weiterbildungen des Erfindungsgegenstandes sind der nachfolgenden Figurenbeschreibung, den Unteransprüchen und den Zeichnungen zu entnehmen.

### Kurze Beschreibung der Zeichnungen

Nachfolgend ist ein Ausführungsbeispiel der Erfindung an Hand der Zeichnung beschrieben.

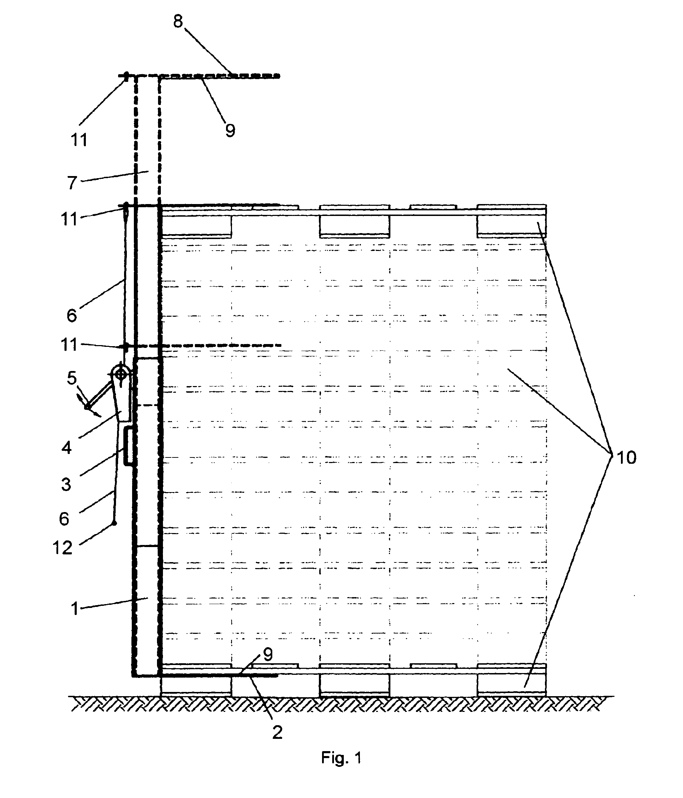

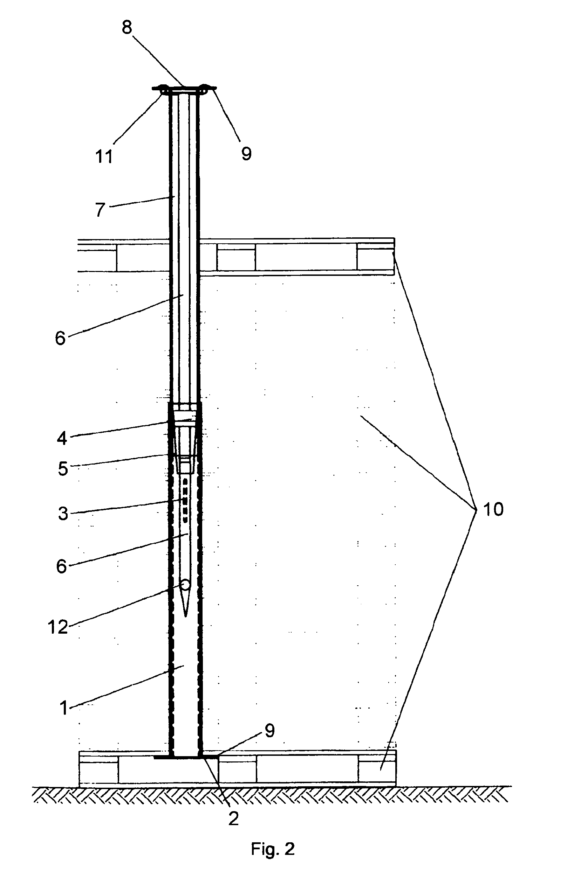

In Fig. 1 und 2 ist in schaubildlicher Darstellung die Spannvorrichtung, die einen Stapel 10 umspannt, in zwei Ansichten gezeigt.

### Beste Ausführungsform der Erfindung

Die Spannvorrichtung ist aus zwei ineinander verschiebbaren Elementen aufgebaut, einem Gehäuseunterteil 1 und einem Schiebeteil 7. Der Gehäuseunterteil 1 besteht aus einem Formrohr, an welches an dessen unterem Ende eine Fußplatte 2 angeschweißt ist. Auf der Fußplatte 2 ist ein rutschhemmender Belag 9 angeordnet. Am Gehäuseunterteil 1 ist in für die Handhabung geeigneter Höhe ein Traggriff 3 vorgesehen. Am oberen Ende des Gehäuseunterteiles 1 befindet sich eine Gurtspannvorrichtung 4 mit einem Spannhebel 5 und einem Spanngurt 6.

Der Schiebeteil 7 besteht ebenfalls aus einem Formrohr, mit einem gegenüber dem Innendurchmesser des Formrohres des Gehäuseunterteiles 1 geringeren Außendurchmesser, wodurch das Formrohr des Schiebeteiles 7 im Formrohr des Gehäuseunterteiles 1 verschiebbar gelagert werden kann. Am oberen Ende des Schiebeteiles 7 ist eine Kopfplatte 8 angeordnet, die ebenfalls mit einem rutschhemmenden Belag 9 versehen ist.

In der schaubildlichen Darstellung sind in Fig. 1 drei Positionen des Schiebeteils 7 und dessen Kopfplatte 8 gezeigt, und zwar die unterste Position, die an den Stapel 10 angepasste Position und die oberste Position. Die Höhe der Kopfplatte 8 in der untersten Position ist darauf ausgelegt, dass der Anwender den Schiebeteil 7 leicht mit seiner Hand umfassen, aus dem Gehäuseunterteil 1 herausziehen und auf die für den zu umspannenden Stapel 10 erforderliche Höhe bewegen kann. Beim Einziehen sollen damit auch Verletzungen vermieden werden.

An der Kopfplatte 8, und zwar in einem Bereich, der das Formrohr des Schiebeteiles 7 an der dem Stapel 10 abgewandten Seite überragt, ist ein Gurtaufnahmebügel 11 dargestellt, in welchem die Gurtschlaufe des Spanngurtes 6 eingehängt ist. Der Spanngurt 6 ist in seiner Länge auf die maximale Höhe der erfindungsgemäßen Spannvorrichtung abgestimmt und gegen Herausrutschen aus der Gurtspannvorrichtung 4 mit einem Knoten 12 gesichert.

Sämtliche Teile können aus Leichtmetall, Kunststoffen oder korrosionsgeschützten Stahlelementen hergestellt sein.

## Patentansprüche

1. Spannvorrichtung zum Sichern von stapelbarem Ladegut, mit einem Gehäuseunterteil (1) und einem im Gehäuseunterteil (1) verschiebbar gelagerten Schiebeteil (7), wobei der Gehäuseunterteil (1) und der Schiebeteil (7) aus jeweils einem Formrohr bestehen, und am unteren Ende des Formrohres des Gehäuseunterteiles (1) eine Fußplatte (2) sowie am oberen Ende des Formrohres des Schiebeteiles (7) eine Kopfplatte (8) angeordnet ist, **dadurch gekennzeichnet, dass** im Bereich des offenen oberen Endes des Formrohres des Gehäuseunterteiles (1) eine Gurtspannvorrichtung (4) angeordnet ist, die zum Spannen eines den Gehäuseunterteil (1) und den Schiebeteil (7) verbindenden Spanngurtes (6) vorgesehen ist.

2. Spannvorrichtung nach Anspruch 1, **dadurch gekennzeichnet, dass** die Kopfplatte (8) auf der dem Stapel (10) abgewandten Seite das Formrohr des Schiebeteiles (7) überragt und am überragenden Bereich ein Gurtaufnahmebügel (11) vorgesehen ist, an dem die Gurtschlaufe des Spanngurtes (6) eingehängt ist.

3. Spannvorrichtung nach Anspruch 2, **dadurch gekennzeichnet, dass** die Gurtspannvorrichtung (4) durch den Spanngurt (6) mit Hilfe eines an der Gurtspannvorrichtung (4) angeordneten Spannhebels (5) spannbar mit dem Gurtaufnahmebügel (11) verbunden ist.

4. Spannvorrichtung nach einem der Ansprüche 1 bis 3, **dadurch gekennzeichnet, dass** der Spanngurt (6) zur Begrenzung der Schiebehöhe des Schiebeteiles (7) mit einem Sicherungsknoten (12) versehen ist.

5. Spannvorrichtung nach einem der Ansprüche 1 bis 4, **dadurch gekennzeichnet, dass** an der Fußplatte (2) und der Kopfplatte (8) ein rutschsicherer Belag (9) angeordnet ist.

6. Spannvorrichtung nach einem der Ansprüche 1 bis 5, **dadurch gekennzeichnet, dass** am Gehäuseunterteil (1) ein Handgriff (3) angeordnet ist.

## Claims

1. Tensioning device for securing stackable loads comprising a housing lower part (1) and a sliding part (7) displaceably mounted in the housing lower part (1), the housing lower part (1) and the sliding part (7) each consisting of a shaped tube, and a foot plate (2) being arranged at the lower end of the shaped tube of the housing lower part (1) and a head plate (8) being arranged at the upper end of the shaped tube of the sliding part (7), **characterised in that** in the region of the open upper end of the shaped tube of the housing lower part (1) there is arranged a belt tensioning device (4) for tensioning a belt (6) connecting the housing lower part (1) and the sliding part (7).

2. Tensioning device according to claim 1, **characterised in that** the head plate (8) projects beyond the shaped tube of the sliding part (7) on the side remote from the stack (10) and a belt-receiving hoop (11) to which the loop of the belt (6) is attached is provided on the projecting region.

3. Tensioning device according to claim 2, **characterised in that** the belt tensioning device (4) is tensionably connected to the belt-receiving hoop (11) via the belt (6) by means of a tensioning lever (5) arranged on the belt tensioning device (4).

4. Tensioning device according to any one of claims 1 to 3, **characterised in that** the belt (6) is provided with a securing knot (12) for limiting the sliding height of the sliding part (7).

5. Tensioning device according to any one of claims 1 to 4, **characterised in that** a non-slip coating (9) is arranged on the foot plate (2) and the head plate (8)

6. Tensioning device according to any one of claims 1 to 5, **characterised in that** a handle (3) is arranged on the housing lower part (1).

## Revendications

1. Dispositif de serrage pour sécuriser un produit à charger empilable, avec une partie inférieure de boîtier (I) et une partie coulissante (7) montée de façon déplaçable dans la partie inférieure de boîtier (1), où la partie inférieure de boîtier (1) et la partie coulissante (7) sont formées chacune d'un tube de forme, et à l'extrémité inférieure du tube de forme de la partie inférieure de boîtier (1) est disposée une plaque de pied (2) ainsi qu'à l'extrémité supérieure du tube de forme de la partie coulissante (7) est disposée une plaque de tête (8), **caractérisé en ce que** dans la zone de l'extrémité supérieure ouverte du tube de forme de la partie inférieure de boîtier (1) est disposé un dispositif de serrage à sangle (4) prévu pour serrer une sangle de serrage (6) reliant la partie inférieure de boîtier (1) et la partie coulissante (7).

2. Dispositif de serrage selon la revendication 1, **caractérisé en ce que** la plaque de tête (8) ressort, sur le côté, opposé à la pile (10), du tube de forme de la partie coulissante (7) et, sur la zone en saillie, est prévu un étrier support de sangle (11) sur lequel la boucle de sangle de la sangle de serrage (6) est accrochée.

3. Dispositif de serrage selon la revendication 2, **caractérisé en ce que** le dispositif de serrage à sangle (4) est relié de façon serrable à l'étrier support de sangle (11) au moyen de la sage de serrage (6), à l'aide d'un levier de serrage (5) disposé sur le dispositif de serrage à sangle (4).

4. Dispositif de serrage selon l'une des revendications 1 à 3, **caractérisé en ce que** la sangle de serrage (6) est munie d'un noeud de sécurité (12), pour limiter la hauteur de coulissement de la partie coulissante (7).

5. Dispositif de serrage selon l'une des revendications 1 à 4, **caractérisé en ce que**, sur la plaque de pied (2) et la plaque de tête (8), est disposé une garniture (9) fournissant une sécurité contre le ripage.

6. Dispositif de serrage selon l'une des revendications 1 à 5, **caractérisé en ce qu'**une poignée (3) est disposée sur la partie inférieure de boîtier (1).
